# EUROPEAN PATENT APPLICATION

(11) **EP 3 940 911 A1**
(43) Date of publication of application: **19.01.2022**
(21) Application number: 20770649.0
(22) Date of filing: 06.03.2020
(51) Int. Cl.: H02H 7/18

(54) **BATTERY PROTECTION CIRCUIT AND ELECTRONIC CIGARETTE**

(30) Priority: 13.03.2019 CN 201920315437 U
(71) Applicant: Changzhou Patent Electronic Technology Co., Ltd, Changzhou, Jiangsu 213022 (CN)
(72) Inventor: QIU, Weihua, Hangzhou, Jiangsu 213022 (CN); LIU, Kui, Hangzhou, Jiangsu 213125 (CN)
(74) Representative: Zaboliene, Reda
(86) International application number: PCT/CN2020/078112
(87) International publication number: WO 2020/182066

(57) **Abstract**

The present disclosure discloses a battery protection circuit and an electronic cigarette., the power supply input end terminal of a first protection chip being connected to a voltage bus terminal of a charging interface; when the voltage of the power supply input terminal is greater than a safety threshold, the first protection chip disconnects the circuit connection between the power supply input terminal and the power supply output terminal; when the voltage of the power supply input terminal is less than or equal to the safety threshold, the first protection chip connects the circuit between the power supply input terminal and the power supply output terminal. The present disclosure solves the problem in the related art that the voltage at a charging interface is too high when a charging circuit fails, easily causing burning of a charging chip and a control chip, resulting in battery damage or fire.

## Description

### TECHNICAL FIELD

The present disclosure relates to the technical field of electronic equipment, in particular to a battery protection circuit and an electronic cigarette.

### BACKGROUND

In order to facilitate the portable use of the electronic cigarette, the electronic cigarette is usually provided with a battery assembly that can be repeatedly charged, and a charging circuit for charging the battery assembly.

However, when the charging circuit is due to aging of the circuit or its own circuit connection error or failure of the voltage detection terminal of the charging chip, etc., the voltage at the charging interface will be too high, which will easily lead to the burning of the charging chip and the control chip (for example, MCU), causing battery damage and fire.

### SUMMARY

In order to solve the problem of excessively high voltage at the charging interface when the charging circuit fails in the prior art, which may easily cause the charging chip and the control chip to burn out, and cause battery damage and fire, the embodiment of the present disclosure provides a battery protection circuit and an electronic cigarette. The technical solution is as follows:
In a first aspect, a battery protection circuit is provided, the battery protection circuit includes a first protection chip, the first protection chip includes a power input terminal and a power output terminal, wherein:
the power input terminal is connected to a voltage bus terminal of the charging interface, and the power output terminal is connected to a battery assembly through a charging circuit;
when voltage of the power input terminal is greater than a safety threshold, the first protection chip disconnects the circuit connection between the power input terminal and the power output terminal;
when the voltage of the power input terminal is less than or equal to the safety threshold, the first protection chip connects the circuit between the power input terminal and the power output terminal.

Optionally, the first protection chip is an ETA7014 chip.

Optionally, the power output terminal is electrically connected to an external power detection terminal of a control chip.

Optionally, the power output terminal is electrically connected to the first terminal of the first current limiting resistor, the second terminal of the first current limiting resistor is electrically connected to the external power detection terminal of the control chip, the second terminal of the first current limiting resistor also passes through the second current limiting resistor to ground.

Optionally, the enable terminal of the first protection chip is connected to the voltage bus terminal of the charging interface through a third current limiting resistor.

Optionally, the feedback terminal of the first protection chip is connected to the voltage bus terminal of the charging interface through a fourth current limiting resistor, and the feedback terminal of the first protection chip is also grounded through a fifth current limiting resistor.

Optionally, the charging circuit includes a charging chip and a light emitting diode, wherein:
the power output terminal is electrically connected with a charging input terminal of the charging chip, and the charging output terminal of the charging chip is electrically connected with the battery assembly;
the power output terminal is also electrically connected to an anode of the light emitting diode, and a cathode of the light emitting diode is connected to the charging indication terminal of the charging chip.

Optionally, the anode of the light emitting diode is connected to the output terminal of the power supply through a sixth current limiting resistor.

Optionally, the voltage bus terminal of the charging interface is grounded through a filter capacitor; and/or,
the power output terminal is grounded through a filter capacitor; and/or,
the power input terminal is grounded through a filter capacitor.

Optionally, the battery protection circuit further includes a second protection chip, and the second protection chip includes a power terminal, a ground terminal, a heat dissipation terminal, and a detection terminal, wherein:
the power terminal is electrically connected to the charging output terminal of the charging circuit;
the power terminal is electrically connected to a positive electrode of the battery assembly, the ground terminal of the second protection chip is electrically connected to a negative electrode of the battery assembly, the heat dissipation terminal of the second protection chip is electrically connected to the ground terminal of the second protection chip, the detection terminal of the second protection chip is grounded.

In a second aspect, an electronic cigarette is provided, the electronic cigarette includes the battery protection circuit, the charging circuit, the battery assembly, and the atomizer according to the first aspect or any optional implementation of the first aspect, wherein:
the battery protection circuit is connected to the power input terminal of the charging circuit;
the power output terminal of the charging circuit is connected to the battery assembly;
the battery assembly is electrically connected to the atomizer, and provides electrical energy to the atomizer.

The beneficial effects of the present disclosure are:

By arranging the first protection chip between the voltage bus terminal of the charging interface and the charging circuit, when the voltage of the first protection chip of the voltage bus terminal of the charging interface is greater than the safety threshold, the first protection chip disconnects the circuit connection between the power input terminal and the power output terminal; when the voltage of the power input terminal is less than or equal to the safety threshold, the first protection chip connects to the circuit between the power input terminal and the power output terminal; it solves the problem of excessively high voltage at the charging interface when the charging circuit fails in the related technology, which may easily cause the charging chip and the control chip to burn, causing battery damage and fire; the effect of protecting the battery assembly is achieved.

### BRIEF DESCRIPTION OF THE DRAWINGS

In order to explain the technical solutions in the embodiments of the present utility model more clearly, the following will briefly introduce the drawings that need to be used in the description of the embodiments. Obviously, the drawings in the following description are only some implementations of the present utility model. For example, for those of ordinary skill in the art, without creative work, other drawings can be obtained based on these drawings.
FIG. 1 is a schematic diagram of the circuit connection of a battery protection circuit 100 provided in an embodiment of the present disclosure;
Fig. 2 is a schematic diagram of the pins of the control chip provided in an embodiment of the present disclosure.

### DETAILED DESCRIPTION OF PREFERRED EMBODIMENTS

In order to make the purpose, technical solutions and advantages of the present utility model clearer, the following will further describe the embodiments of the present utility model in detail with reference to the accompanying drawings.

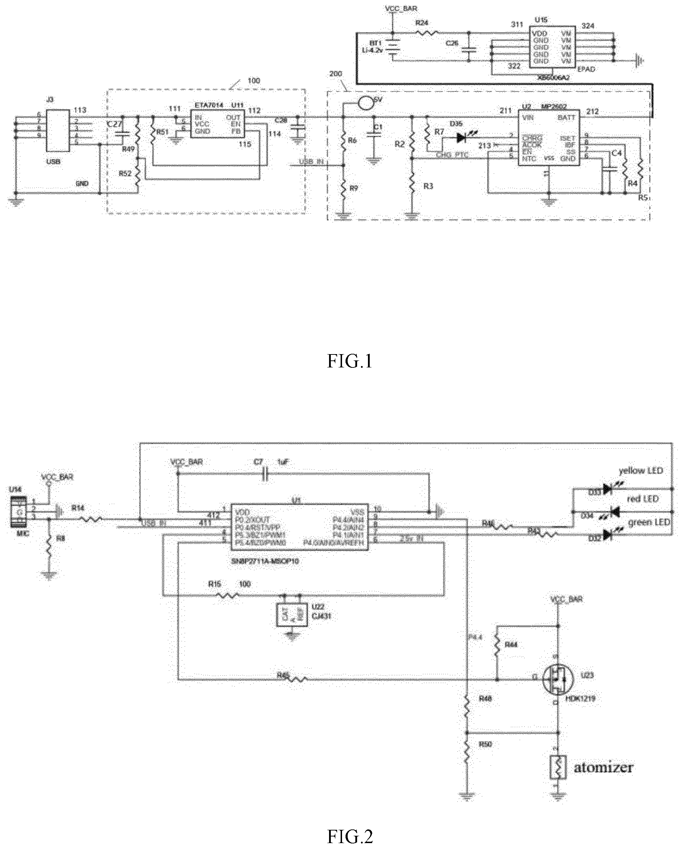

Please refer to FIG.1, the present disclosure provides a battery protection circuit 100. The battery protection circuit includes a first protection chip U11. The first protection chip U11 includes a power input terminal 111 and a power output terminal 112, wherein:
the power input terminal 111 is connected to the voltage bus terminal 113 of the charging interface J3, and the power output terminal 112 is connected to the battery assembly through the charging circuit 200;
when the voltage of the power input terminal 111 is greater than the safety threshold, the first protection chip U11 disconnects the circuit connection between the power input terminal 111 and the power output terminal 112;
when the voltage of the power input terminal 111 is less than or equal to the safety threshold, the first protection chip U11 connects the circuit between the power input terminal 111 and the power output terminal 112.
wherein, when the charging interface J3 is connected to an external power source, the current provided by the external power source flows from the voltage bus terminal 113 of the charging interface J3 to the power input terminal 111 of the first protection chip Ull; when the voltage of the power input terminal 111 is less than or equal to the safety threshold, the first protection chip U11 connects the circuit between the power input terminal 111 and the power output terminal 112, so that the current provided by the external power supply flows from the power output terminal 112 to the charging circuit 200, and the charging circuit 200 then provides current to the battery assembly to charge the battery assembly.

Optionally, the specific implementation of connecting the power output terminal 112 to the battery assembly through the charging circuit 200 can be as follows: the charging circuit 200 includes a charging chip U2, wherein: the power output 112 is electrically connected to the charging input 211 of the charging chip U2, the charging output terminal 222 of the charging chip U2 is connected to the battery assembly.

Optionally, the first protection chip U11 is an ETA7014 chip, which is a high-voltage 36V overvoltage protection chip. It can be seen that the battery protection circuit 100 provided in this application adopts the ETA7014 chip with a safety threshold of 36V. Wherein, the resistance of the ETA7014 chip is very low 35mohm and consumes less power. The ETA7014 chip can respond quickly to input surges, and turn off the switch as a 20v high voltage spike in less than 0.1us stations. The response time of the overheating protection circuit from detecting that the safety threshold is exceeded to disconnecting the circuit between the power input terminal 111 and the power output terminal 112 is shortened, and the possibility that the battery assembly is damaged due to the excessive voltage provided by the external power supply is reduced.

Optionally, the enable terminal 114 of the first protection chip U11 is connected to the voltage bus terminal 113 of the charging interface J3 through a third current limiting resistor R51; when the external power supply is connected to the charging port J3, the external power supply provides a high level to the enable terminal 114 of the first protection chip U11 through the voltage bus terminal 113 of the charging interface J3, enable the first protection chip U11, the enabled first protection chip U11 controls the disconnection and connection of the circuit between the power input terminal 111 and the power output terminal 112 according to the voltage of the power input terminal 111; when the charging interface J3 is not connected to any external power source, the voltage bus terminal 113 of the charging interface J3 provides a low level to the enable terminal 114 of the first protection chip U11, and the first protection chip U11 is not enabled.

Optionally, the feedback terminal 115 of the first protection chip U11 is connected to the voltage bus terminal 113 of the charging interface J3 through a fourth current limiting resistor R49, the feedback terminal 115 of the first protection chip U11 is also grounded through the fifth current limiting resistor R52. For example, as shown in FIG. 1, the pin of the first protection chip U11FB is connected to the voltage bus terminal 113 of the charging interface J3 through the fourth current limiting resistor R49, and is grounded through the fifth current limiting resistor R52.

Optionally, the system power terminal VCC of the first protection chip U11 is electrically connected to the voltage bus terminal 113 of the charging interface J3; the ground terminal GND of the first protection chip U11 is grounded.

Optionally, the voltage bus terminal 113 of the charging interface J3 is grounded through the filter capacitor C27.

Optionally, the power output terminal 112 is grounded through a filter capacitor C28.

Optionally, the power input terminal 111 is grounded through a filter capacitor C1.

Optionally, the charging interface J3 involved in this application may be a universal serial bus (Universal Serial Bus, USB).

Optionally, referring to FIG. 1 and FIG. 2, the power output terminal 112 is electrically connected to the external power detection terminal 411 of the control chip U1. The specific implementation can be as follows: the power output terminal 112 is electrically connected to the first terminal of the first current limiting resistor R6, the second terminal of the first current limiting resistor R6 is electrically connected to the external power detection terminal 411 of the control chip U1 (for example, the P0.4/RST/VPP pin of the control chip Ul), the second terminal of the first current limiting resistor R6 is also grounded through the second current limiting resistor R9.

In summary, the battery protection circuit provided by the present disclosure is provided with a first protection chip U11 between the voltage bus terminal 113 of the charging interface J3 and the charging circuit 200, when the voltage of the first protection chip U11 of the voltage bus terminal 113 of the charging interface J3 is greater than the safety threshold, the first protection chip U11 disconnects the circuit connection between the power input terminal 111 and the power output terminal 112; when the voltage of the power input terminal 111 is less than or equal to the safety threshold, the first protection chip U11 connects to the circuit between the power input terminal 111 and the power output terminal 112; it solves the problem of excessively high voltage at the charging interface J3 when the charging circuit 200 fails in the related art, which may easily cause the charging chip and the control chip (for example, MCU) to burn, causing battery damage and fire; the effect of protecting the battery assembly is achieved.

Optionally, the charging circuit 200 further includes a light emitting diode D35, wherein: the power output terminal 112 is electrically connected to the anode of the light emitting diode D35, the cathode of the light emitting diode D35 is connected to the charging indicator terminal 213 of the charging chip U2, the light emitting diode D35 is used to indicate whether the battery assembly is in a charging state. For example, the charging indicator terminal 213 of the charging chip U2 is the C̅H̅R̅G̅ pin of the charging chip U2, the C̅H̅R̅G̅ pin of the charging chip U2 is connected to the cathode of the light emitting diode D35, the anode of the light emitting diode D35 is connected to the power output terminal 112.

Specifically, the charging chip U2 outputs a low voltage through the charging indicating terminal 213 during the charging process to light up the light emitting diode D35.

Optionally, the anode of the light emitting diode D35 is connected to the power output terminal 112 through the sixth current limiting resistor R7.

Optionally, the charging circuit also includes a diode, other light emitting diodes (the light emitting color is different from the light emitting diode D35) and a resistor, of which:
the first terminal of the resistor is electrically connected to the power output terminal 112, the second terminal of the resistor is electrically connected to the anode of the diode, the cathode of the diode is electrically connected to the charging state indicating terminal; the second terminal of the resistor is also electrically connected to the anode of the other light emitting diode, the cathode of the other light emitting diode is grounded; the charging chip U2 outputs a low voltage through the charging indicating terminal 213 during the charging process to light up the light emitting diode D35; the charging chip U2 controls the charging indicating terminal 213 to be in a high impedance state when the battery assembly is fully charged, to light up the other light emitting diodes.

Optionally, the thermal detection terminal of the charging chip U2 in the charging circuit 200 (for example, the NTC pin of the charging chip U2) is connected to the power output terminal 112 of the first protection chip U11 through a current limiting resistor R2; the thermal detection terminal of the charging chip U2 in the charging circuit 200 is also grounded through a current limiting resistor R3 .

Optionally, the charging current setting terminal of the charging chip U2 (for example, the ISET pin of the charging chip U2) is grounded through a resistor R5; the lighting time setting terminal of the charging chip U2 (for example, the IBF pin of the charging chip U2) is grounded through a resistor R4, and the charging current provided by the charging chip U2 to the battery assembly can be set by setting the resistance of the resistor R5.

Optionally, the soft-start timing terminal of the charging chip U2 (for example, the SS pin of the charging chip U2) is grounded through the filter capacitor C4.

In actual implementation, the charging chip U2 can use the MP2602 chip.

Optionally, the battery protection circuit further includes a second protection chip U15, and the second protection chip U15 includes a power terminal 311, a ground terminal 322, a heat dissipation terminal 323, and a detection terminal 324, wherein:
the power terminal 311 is electrically connected to the charging output terminal 212 of the charging circuit 200;
the power terminal 311 is electrically connected to the positive pole of the battery assembly, the ground terminal 322 of the second protection chip U15 is electrically connected to the negative electrode of the battery assembly, the heat dissipation terminal 323 of the second protection chip U15 is electrically connected to the ground terminal 322 of the second protection chip U15, the detection terminal 324 of the second protection chip U15 is grounded.

Specifically, the second protection chip U15 of this embodiment can be used to prevent overcharge or over-discharge of the battery assembly. The ground terminal 322 of the second protection chip U15 is connected to the negative electrode of the battery assembly, the detection terminal 324 of the second protection chip U15 is grounded, so the negative electrode of the battery assembly is not directly grounded, the second protection chip U15 is arranged between the negative electrode of the battery assembly and the system ground, when the battery assembly needs to be charged or discharged, the negative electrode of the battery assembly needs to be connected to the ground through the second conductive protection chip U15. Therefore, the second protection chip U15 in the battery protection circuit 100 can detect the current or voltage on its own pins or components, determine whether the circuit state is in the overcharge or over-discharge state, and then disconnect the connection between the negative electrode of the battery assembly and the system ground in the overcharge or over-discharge state, so as to protect the battery assembly. Specifically, the second protection chip U15 determines that the circuit state is in an overcharge or over-discharge state, and controls the disconnection between the negative electrode of the battery and the system ground, thereby disconnecting the connection between the battery assembly and the charging circuit 200 or the discharging circuit, so that the battery is no longer In the intervention circuit, the occurrence of overcharge or over-discharge of the battery assembly is prevented, so as to realize the protection of the battery assembly.

Optionally, the power terminal 311 of the second protection chip U15 is grounded through the filter capacitor C26.

Optionally, the power terminal 311 of the second protection chip U15 receives the system power supply voltage VCC_BAR through the current resistor R25.

In actual implementation, the second protection chip U15 can use the XB6006A2 chip.

The present application provides an electronic cigarette, which includes a charging circuit 200, a battery assembly, an atomizer, and the battery protection circuit involved in any of the above embodiments, wherein: the battery protection circuit is connected to the power input terminal 111 of the charging circuit 200; the power output terminal 112 of the charging circuit 200 is connected to the battery assembly; the battery assembly is electrically connected to the atomizer, and provides electrical energy to the atomizer.

Optionally, the battery assembly is connected to the atomizer through a load circuit, an electronic switch U23 is provided in the load circuit, the control terminal of the electronic switch U23 is electrically connected to the output terminal of the control chip U1 of the control circuit (for example, P5.4/BZD/PWM0 of the control chip U1); when the control chip U1 detects the cigarette lighter signal, it can control the electronic switch U23 to close so that the battery assembly provides power to the atomizer through the load circuit; the control chip U1 can also control the electronic switch U23 to turn on, so that the battery assembly stops providing power to the atomizer.

Specifically, the control chip U1 is connected to the output terminal of the microphone MIC.

The specific implementation can be: the output terminal of the microphone MIC is connected to the P0.2/XOUT pin of the control chip U1, and the control chip U1 uses the detected airflow signal sent by the output terminal of the microphone MIC as a cigarette lighter signal.

Optionally, the atomizer includes a liquid storage cavity for storing e-liquid and an atomizing component for heating the e-liquid, and the battery component is electrically connected to the atomizing component through a load circuit. Optionally, the upper terminal of the electronic cigarette is also provided with a cigarette holder, which is in communication with the atomizing cavity, and the user of the electronic cigarette can smoke through the cigarette holder.

In the embodiment of the present disclosure, the type of the battery assembly may be a lithium battery, a lead-acid battery, an iron-nickel battery, a metal oxide battery, a zinc-silver battery, a zinc-nickel battery, etc., which can provide electrical energy.

The terms "first" and "second" are only used for descriptive purposes, and cannot be understood as indicating or implying relative importance or implicitly indicating the number of technical features. Therefore, the defined "first" and "second" features may explicitly or implicitly include one or more of these features. In the description of the present disclosure, unless otherwise specified, "multiple" means two or more.

Those of ordinary skill in the art can understand that all or part of the steps in the above-mentioned embodiments can be completed by hardware, or by a program instructing relevant hardware to be completed. The program can be stored in a computer-readable storage medium. The storage medium mentioned can be a read-only memory, a magnetic disk or an optical disk, etc.

The above-mentioned embodiments merely represent several implementations of the present application, and the descriptions thereof are more specific and detailed, but they shall not be understood as a limitation on the scope of the present application. It should be noted that, for those of ordinary skill in the art, variations and improvements may still be made without departing from the concept of the present application, and all of which shall fall into the protection scope of the present application. Therefore, the scope of protection of the present application shall be subject to the appended claims.

## Claims

1. A battery protection circuit, **characterized in that**, the battery protection circuit comprises a first protection chip (U11), and the first protection chip (U11) comprises a power input terminal (111) and a power output terminal (112), wherein:
the power input terminal (111) is connected to a voltage bus terminal (113) of a charging interface (J3), and the power output terminal (112) is connected to a battery assembly through a charging circuit (200);
when voltage of the power input terminal (111) is greater than a safety threshold, the first protection chip (U11) disconnects the circuit connection between the power input terminal (111) and the power output terminal (112);
when the voltage of the power input terminal (111) is less than or equal to the safety threshold, the first protection chip (U11) connects the circuit between the power input terminal (111) and the power output terminal (112).

2. The battery protection circuit according to claim 1, **characterized in that**, the first protection chip (U11) is an ETA7014 chip.

3. The battery protection circuit according to claim 1, **characterized in that**, the power output terminal (112) is electrically connected to an external power detection terminal (411) of a control chip (U1).

4. The battery protection circuit according to claim 3, **characterized in that**, the power output terminal (112) is electrically connected to a first terminal of a first current limiting resistor (R6), a second terminal of the first current limiting resistor (R6) is electrically connected to the external power detection terminal (411) of the control chip (U1), the second terminal of the first current limiting resistor (R6) is also grounded through a second current limiting resistor (R9).

5. The battery protection circuit according to claim 1, **characterized in that**, an enable terminal (114) of the first protection chip (U11) is connected to the voltage bus terminal (113) of the charging interface (J3) through a third current limiting resistor (R51).

6. The battery protection circuit of claim 1, **characterized in that**, a feedback terminal (115) of the first protection chip (U11) is connected to the voltage bus terminal (113) of the charging interface (J3) through a fourth current limiting resistor (R49), the feedback terminal (115) of the first protection chip (U11) is also grounded through a fifth current limiting resistor (R52).

7. The battery protection circuit according to claim 1, **characterized in that**, the charging circuit (200) comprises a charging chip (U2) and a light emitting diode (D35), wherein:
the power output terminal (112) is electrically connected to a charging input terminal (211) of the charging chip (U2), and the charging output terminal (212) of the charging chip (U2) is electrically connected to the battery assembly;
the power output terminal (112) is also electrically connected to an anode of the light emitting diode (D35), and a cathode of the light emitting diode (D35) is connected to a charging indication terminal (213) of the charging chip (U2).

8. The battery protection circuit according to claim 7, **characterized in that**, the anode of the light emitting diode (D35) is connected to the power output terminal (112) through a sixth current limiting resistor (R7).

9. The battery protection circuit of claim 1, **characterized in that**, the voltage bus terminal (113) of the charging interface (J3) is grounded through a filter capacitor (C27); and/or,
the power output terminal (112) is grounded through a filter capacitor (C28); and/or,
the power input terminal (111) is grounded through a filter capacitor (C1).

10. The battery protection circuit according to claim 1, **characterized in that**, the battery protection circuit (100) further comprises a second protection chip (U15), the second protection chip (U15) comprises a power terminal (311), a ground terminal (322), a heat dissipation terminal (323) and a detection terminal (324), wherein:
the power terminal (311) is electrically connected to the charging output terminal (212) of the charging circuit (200);
the power terminal (311) is electrically connected to a positive electrode of the battery assembly, the ground terminal (322) of the second protection chip (U15) is electrically connected to a negative electrode of the battery assembly, the heat dissipation terminal (323) of the second protection chip (U15) is electrically connected to the ground terminal (322) of the second protection chip (U15), the detection terminal (324) of the second protection chip (U15) is grounded.

11. An electronic cigarette, **characterized in that**, the electronic cigarette comprises the battery protection circuit (100), the charging circuit (200), the battery assembly, and the atomizer according to any one of claims 1 to 10, wherein:
the battery protection circuit (100) is connected to the power input terminal (111) of the charging circuit (200);
the power output terminal (112) of the charging circuit (200) is connected to the battery assembly;
the battery assembly is electrically connected to the atomizer, and provides electrical energy to the atomizer.
